## Europäisches Patentamt

## European Patent Office

## Office européen des brevets

(11) Veröffentlichungsnummer: **0 218 098 B1**

(12) **EUROPÄISCHE PATENTSCHRIFT**

(45) Veröffentlichungstag der Patentschrift:
04.07.90

(51) Int. Cl.⁵: **C08L 25/00**

(21) Anmeldenummer: **86112219.0**

(22) Anmeldetag: **04.09.86**

(54) Mischungen aus Styrolpolymerisat, Ionomeren und gepfropftem Kautschuk und deren Verwendung zur Herstellung von Formmassen.

(30) Priorität: **12.09.85 DE 3532569**

(43) Veröffentlichungstag der Anmeldung:
**15.04.87 Patentblatt 87/16**

(45) Bekanntmachung des Hinweises auf die Patenterteilung:
**04.07.90 Patentblatt 90/27**

(84) Benannte Vertragsstaaten:
**BE DE FR GB**

(56) Entgegenhaltungen:
**US-A- 4 196 267**

(73) Patentinhaber: **BASF Aktiengesellschaft,
Carl-Bosch-Strasse 38, D-6700 Ludwigshafen(DE)**

(72) Erfinder: **Wassmuth, Georg, Dr.,
Von-Sturmfeder-Strasse 60, D-6700 Ludwigshafen(DE)**
Erfinder: **Brandstetter, Franz, Dr., Ritterbueschel 45,
D-6730 Neustadt(DE)**
Erfinder: **Ziegler, Walter, Dr., Starenweg 15,
D-6803 Edingen-Neckarhausen(DE)**
Erfinder: **Hambrecht, Juergen, Dr., Am Klosterwald 31,
D-4400 Muenster-Hiltrup(DE)**

## Beschreibung

Die Erfindung betrifft eine thermoplastische Formmasse aus 20 bis 95 Gewichtsteilen mindestens eines Styrolpolymerisats, 5 bis 30 Gew.-Teilen mindestens eines ionisch vernetzten Ethylencopolymerisats, das α,β-ungesättigte Alkencarbonsäuren, von denen mindestens 10% mit einem Metallsalz neutralisiert sind, einpolymerisiert enthält und gegebenenfalls üblichen Zusätzen in üblichen Mengen.

Derartige Massen können in geschmolzenem Zustand z.B. durch Strangpressen oder Spritzgießen zu Folien, Rohren, Schaumstoffen etc. verformt oder auf Substrate auflaminiert werden.

Es ist bereits bekannt, Ionomere aus Ethylencopolymerisaten, die enthalten eine α,β-ungesättigte Alkencarbonsäure, welche zum Teil mit einem Metallsalz neutralisiert sind mit Styrolpolymerisaten zu mischen, um nach Aufschäumen der erhaltenen Masse zu geschäumten Formkörpern mit verbesserter Einheitlichkeit und mit verbesserten physikalischen Eigenschaften wie Wärmeleitfähigkeit zu kommen (vgl. US-Patent 4 196 267). Es ist auch bereits bekannt, verträgliche Copolymermischungen aus Styrol-(Meth-)Acrylsäure-Copolymerisaten und Ethylen-Acrylsäure-Copolymerisaten dadurch zu erhalten, daß man die Ethylencopolymerisate durch Vermischen mit Natriummethylat oder Zinkacetat in der Wärme in die Ionomere überführt (vgl. US-Patent 3 437 718). Desgleichen sind Mischungen aus Styrolpolymerisaten mit Ionomeren für die Verwendung als Schmiermittel bzw. Dispersionshilfsmittel bereits beschrieben (vgl. EP-A1 54 761). Zur Verbesserung der Flexibilität von Schaumstoffen sind auch bereits schon ternäre Mischungen aus Styrolpolymerisat, Ionomer aus Basis Ethylen-Acrylsäure-Acrylsäuresalz-Copolymerisat und Polyethylen, Polypropylen oder Polybutadien eingesetzt worden (vgl. Derwent Abstracts 13 851 Y/08 entspr. JP-A1-52/004 566 sowie US-Patent 4 196 267).

Nachteilig bei den bekannten Massen auf Basis Styrolpolymerisat und Ionomer ist die geringe (Kerb)-Schlagzähigkeit und insbesondere die geringe Fließfähigkeit, was sich in einer Erschwerung der Verarbeitbarkeit auswirkt.

Aufgabe der vorliegenden Erfindung war es daher, die bekannten, Ionomere enthaltenden Polymerisatmassen dahingehend zu verbessern, daß Massen mit ausgezeichneter (Kerb)-Schlagzähigkeit und Fließfähigkeit erhalten werden, die leicht zu Formkörpern mit relativ komplizierten Strukturen verarbeitet werden können.

Diese Aufgabe wurde durch die Schaffung einer thermoplastischen Formmasse der eingangs genannten Art gelöst, die erfindungsgemäß 5 bis 45 Gew.-Teile mindestens eines Synthesekautschuks enthält, auf den Styrol oder α-Methylstyrol pfropfpolymerisiert ist, wobei der Synthesekautschuk eine Glastemperatur unterhalb von 0°C aufweist.

Sie enthält somit 20 bis 95, bevorzugt 40 bis 80 Gew.-Teile Styrolpolymerisat, 5 bis 30, bevorzugt 8 bis 20 Gew.-Teile des ionisch vernetzten Ethylencopolymerisats und 5 bis 45 Gew.-Teile, bevorzugt 25 bis 45 Gew.-Teile mindestens eines Synthesekautschuks, auf den Styrol oder α-Methylstyrol pfropfpolymerisiert ist, wobei der Synthesekautschuk eine Glastemperatur unterhalb von 0°C aufweist. Durch Vermischen der Komponenten bei erhöhter Temperatur, insbesondere zwischen 180 und 280°C, beim gemeinsamen Extrudieren, Kneten oder Verwalzen der Komponenten werden thermoplastische Formmassen erhalten, in denen die Komponenten homogen miteinander vermischt sind.

Unter Styrolpolymerisaten werden im Sinne der Erfindung sowohl Homo- als auch Copolymerisate gegebenenfalls alkylsubstituierter Styrole verstanden. Derartige Polymerisate sind aus der Literatur so bekannt, daß hier nicht mehr auf die Einzelheiten eingegangen werden muß (vgl. z.B. "Ullmanns Encyklopädie der technischen Chemie", 4. Auflage, Band 19, Seiten 265 bis 295, Verlag Chemie GmbH 1980; Kirk-Othmer, "Encyclopedia of Chemical Technology", 3rd. Edition, Vol. 21, Seiten 801 bis 847, John Wiley & Sons, 1983). Unter den in Betracht kommenden Styrolpolymerisaten sind beispielsweise genannt das Polystyrol, Poly-α-methylstyrol, Styrol-Acrylnitril-Copolymerisat, α-Methylstyrol-Acrylnitril-Copolymerisat oder deren Mischungen. Besonders geeignet sich auch Copolymerisate von Styrol oder α-Methylstyrol, welche 10 bis 70 Gewichtsprozent mindestens eines ethylenisch ungesättigten Comonomeren ausgewählt aus der Gruppe der (Meth)-Acrylsäure, (Meth)-Acrylsäurealkylester mit $C_1$- bis $C_4$-Alkylgruppen, (Meth)-Acrylnitril, (Meth)-Acrylamid und/oder Maleinsäureanhydrid einpolymerisiert enthalten. Derartige Styrolcopolymerisate sind ebenfalls bekannt und beispielsweise in den Druckschriften "Kunststoffe" 70, (1980), Seiten 617 bis 618, Industrial Engineering Chemistry 49, (1957), Seiten 1803ff sowie in den US-Patenten 2 439 227 und 2 914 505 beschrieben. Die Styrolpolymerisate haben vorzugsweise eine Viskositätszahl von 40 bis 100, insbesondere 50 bis 80, bestimmt nach DIN 53 726 in 0,5 gew.%iger Dimethylformamidlösung.

Ionisch vernetzte Ethylencopolymerisate – die sogenannten Ionomeren – die eine α,β-ungesättigte Alkencarbonsäure, bei denen mindestens 10, bevorzugt 10 bis 80, insbesondere 15 bis 40 Prozent der Carboxylgruppen mit Metallsalz neutralisiert sind, einpolymerisiert enthalten, sind aus der Literatur wohl bekannt (vgl. die eingangs zitierten Druckschriften sowie die US-Patente 3 404 134, 3 264 272 und 3 969 434 sowie DE-A 3 506 685 [EP-A1 199 011]). Besonders geeignet sind Ethylencopolymerisate, die sich ableiten von Copolymerisaten aus 40 bis 99,9 Gewichtsprozent Ethylen, 0,1 bis 10,0 Gewichtsprozent mindestens einer α,β-ungesättigten Carbonsäure mit mindestens einer Carboxylgruppe wie Acrylsäure oder Methacrylsäure und 0 bis 50 Gewichtsprozent mindestens eines copolymerisierbaren ethylenisch ungesättigten Monomeren ausgewählt aus der Gruppe der (Meth-)Acrylsäurealkylester mit $C_1$- bis $C_4$-Alkylgruppen, (Meth-)Acrylamid, (Meth-)Acrylnitril Maleinsäureanhydrid sowie deren Ester und Amide (vgl. EP-A1-106 999 sowie die US-Patente 3 520 861, 3 201 374 und 3 350 372). Die Schmelzindices der nicht neutralisierten Ethylencopolymerisate liegen im allgemeinen im Bereich von 0,1 bis 500 insbesondere 5 bis 80 g/10 min., gemessen bei 190°C und 2,16 Kp nach DIN 53 735. In den ionisch vernetzten Ethylencopolymerisaten sind die Carboxylgruppen bevorzugt mit Magnesium, Calcium, Zink, Natrium oder Barium zu mindestens 10, bevorzugt 10 bis 80, insbesondere zu 15 bis 40 Prozent neutralisiert. Es kommen aber auch Salze von anderen Metallen der Gruppe 1,2,3,4 und 8 des periodischen Systems der Elemente in Frage.

Die Mischungen können noch übliche Zusatzstoffe wie Schmiermittel, Antioxydantien, Pigmente, Farbstoffe, Flammschutzmittel u.a. in üblichen Mengen, insbesondere in Mengen von 0,05 bis 20 Gewichtsteilen, enthalten.

Erfindungsgemäß sollen die Mischungen zusätzlich noch 5 bis 45, insbesondere 25 bis 45 Gewichtsteile mindestens eines Synthesekautschuks enthalten, der (a) Styrol oder α-Methylstyrol durch Propfpolymerisation aufgepfropft enthält und der (b) eine Glastemperatur unterhalb 0°C aufweisen soll. Unter synthetischem Kautschuk sollen dabei alle synthetischen makromolekularen Stoffe verstanden werden, die bei Raumtemperatur weitgehend amorph sind, eine niedrigere Glastemperatur als 0°C aufweisen und im vernetzten Zustand bei Raumtemperatur ein hohes reversibles Dehnungsvermögen aufweisen. Die Glastemperatur wurde dabei nach K.H. Illers und H. Breuer, "Kolloid-Zeitschrift" 176, (1961), Seite 110 gemessen.

Als Synthesekautschuk kommen insbesondere Polymere auf Basis Acrylsäurealkylester, konjugierter Diene oder Ethylen-Propylen-Diene mit einer Glastemperatur unter -30°C in Frage. Derartige Polymere sind wohlbekannt und zusammenfassend beschrieben in "Ullmanns Encyklopädie der technischen Chemie", 4. Auflage, Band 13, Seiten 595 bis 709, Verlag Chemie, GmbH, D-6940 Weinheim (1977).

Insbesondere geeignete Synthesekautschuke sind: Polybutadien (vgl. DE-A- 14 20 775 und DE-A- 14 95 089), Copolymerisate aus Butadien und Styrol (vgl. GB-A- 649 166), Polyacrylester, die gegebenenfalls vernetzt sein können (vgl. DE-B- 11 38 921, DE-B- 12 24 486 oder DE-B- 12 60 135) sowie Copolymerisate aus Acrylsäureester und Butadien (vgl. DE-B- 12 38 207), ferner Copolymerisate aus Acrylsäureestern mit Styrol, Acrylnitril und Vinylethern und Copolymerisate aus Ethylen und einem nicht konjugierten Dien, die sog. EPDM-Kautschuke (vgl. US-Patente 3 000 866, 3 000 867 und 2 933 480).

Von den vorstehend genannten Synthesekautschuken werden bevorzugt angewendet: Acrylesterpolymerisate mit einer Glastemperatur unter -40°C, Copolymerisate aus mindestens einem konjugierten Dien und mindestens einem Acrylsäureester mit einer Glastemperatur unter -50°C und Polymerisate aus mindestens einem konjugierten Dien mit einer Glastemperatur unter -70°C.

Auf den Synthesekautschuk soll Styrol oder α-Methylstyrol pfropfpolymerisiert sein. Bei der Pfropfung werden auf bereits vorgebildete Makromoleküle nachträglich polymere Seitenketten aus anderen Monomerbausteinen aufgepfropft. Man kann die Pfropfung auf verschiedene Weise durchführen, z.B. in Lösung, Suspension oder in Emulsion durch Zersetzung von Radikale liefernden Verbindungen wie Peroxide oder durch Bestrahlung. Dabei bilden sich Radikale an den Primärpolymeren, im vorliegenden Fall am Kautschuk, an die sich das Monomere durch Polymerisation anlagern kann (vgl. US-Patent 4 154 777).

Die Pfropfcopolymerisation wird bevorzugt in Emulsion durchgeführt. Die Weichphase des Pfropfmischpolymerisats weist bei der bevorzugten Herstellung des Kautschuks und der Pfropfung in Emulsion einen mittleren Teilchendurchmesser $d_{50}$-Wert der integralen Masseverteilung von $\gtrless 0,08\mu$ auf. In der Regel liegt der $d_{50}$-Wert im Bereich von 0,1 bis 0,4 µ; er kann aber auch höher liegen.

Die Monomeren, welche auf den synthetischen Kautschuk pfropfpolymerisiert werden, bestehen aus Styrol und α-Methylstyrol. Die Monomeren können bevorzugt auch aus einem Gemisch dieser Styrole und (Meth-)Acrylsäurealkylester und/oder Acrylnitril bestehen. Die Alkanole der (Meth-)Acrylsäurealkylester können bis zu acht Kohlenstoffatome aufweisen, besonders geeignet ist n-Butylacrylat. Bevorzugt beträgt der Anteil der aufgepfropften Monomeren im gepfropften Kautschuk 20 bis 50, insbesondere 25 bis 40 Gewichtsprozent.

Es ist ein Vorteil der erfindungsgemäßen Mischungen, daß sie Formmassen mit hoher (Kerb-)-Schlagzähigkeit und guter Fließfähigkeit ergeben. Die erhaltenen Formmassen können aufgrund ihres guten Fließverhaltens gut zu Formkörpern mit komplizierten Strukturen verarbeitet werden.

Im einzelnen werden die vorkommenden Parameter wie folgt bestimmt:

1. Bei den mittleren Teilchengrößen handelt es sich um das Gewichtsmittel der Teilchengrößen, wie sie mittels einer analytischen Ultrazentrifuge entsprechend der Methode von W. Scholtan und H. Lange, Kolloid-Zeitschrift und Zeitschrift für Polymere 250, (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gewichtsprozent $\gtrless 50$ der Teilchen einen größeren Durchmesser als der $d_{50}$-Wert.

2. Die Kerbschlagzähigkeit (A$_K$) der Formmasse wurde nach DIN 53 453 an gespritzten Normalkleinstäben bei 23°C ermittelt. Die Spritztemperatur für die Normkleinstäbe betrug dabei 250°C.

3. Die Viskositätszahlen (VZ) wurden in 0,5 gew.%iger Lösung in Toluol bzw. Dimethylformamid als Lösungsmittel bei einer Temperatur von 25°C ermittelt (analog DIN 53 726).

4. Der Schmelzindex (MFI) wurde bei 200°C unter 212 N Last nach DIN 53 735 ermittelt.

Herstellung der Formmassen

Die Herstellung der erfindungsgemäßen Formmassen kann nach verschiedenen Methoden durch Vermischen der drei Komponenten bei Temperaturen von 180 bis 280°C durch gemeinsames Extrudieren, Kneten oder Verwalzen der Komponenten erfolgen, wobei die bei der Polymerisation in Lösung oder in wäßriger Dispersion angefallenen Komponenten vorher isoliert worden sind. Die in wäßriger Dispersion erhaltenen Produkte z.B. der Pfropfmischpolymerisate können teilentwässert als feuchte Krümel, vollständig getrocknet oder direkt als Dispersion in einem für die Dispersionseinmischung geeigneten Extruder zu den anderen Komponenten zugesetzt werden. Es ist aber ebenfalls möglich, zunächst die Styrol- und Kautschukkomponenten vorzumischen und das Ionomer nachträglich mit dieser Vormi-schung zu vermischen.

Beispiele 1 bis 3 und Vergleichsbeispiele a bis c

Zur Herstellung der in den Beispielen untersuchten Formmassen wurden folgende Komponenten eingesetzt (vgl. Tabelle).

1) Als Polystyrolkomponente ein Homopolystyrol mit einer Viskositätszahl von 74 ml/g (in Toluol) (Komponente A-1)

2) als Polystyrolkomponente ein Copolymerisat aus Styrol und Acrylnitril im Gewichtsverhältnis 65: 35 mit einer Viskositätszahl von 80 ml/g in DMF (Komponente A-2).

3) als Ionomerkomponente ein gemäß DE-A 35 06 685 [EP-A1 199 011] hergestelltes Ethylencopolymeri-sat der Zusammensetzung Ethylen 81,4 Gew.%, Acrylsäure 8,6 Gew.% und n-Butylacrylat 10,0 Gew.%. Die Carbonsäuregruppen wurden zu 22 Mol-% mit Zn++ neutralisiert (Komponente B).

4) als gepfropfte Kautschukkomponente ein gemäß Beispiel 1 (a) der EP-A-6 503 hergestelltes feinteiliges Pfropfmischpolymerisat aus 60 Gewichtsteilen mit Tricyclodecenylacrylat vernetztem n-Butylacrylat als Kautschukgrundlage und 40 Gewichtsteilen darauf gepropfter Styrol-Acrylnitril-Mischung im Gewichtsverhältnis 75 : 25 (Komponente C-1).

5) als gepfropfte Kautschukkomponente ein gemäß EP-A- 11 158 als Pfropfmischpolymerisat B beschriebenes Pfropfmischpolymerisat auf Polybutadien-Grundlage mit einer mittleren Teilchengröße von 0,35 μm, das mit Styrol-Acrylnitril im Gewichtsverhältnis 70 : 30 gepfropft wurde und einen Pfropfgrad von 0,38 aufwies (Komponente C-2).

6) als gepfropfte Kautschukkomponente ein gemäß EP-A- 81 761 Komponente B 2 hergestellter Pfropfkautschuk, der auf 60 Teilen einer großteiligen (d50 = 490 nm) vernetzten n-Butylacrylat-Grundstufe einer zweistufig aufgebaute Pfropfhülle aus 1. 15 Styrol und 2. 25 Styrol-Acrylnitril im Gewichtsverhältnis 75 : 25 besitzt (Komponente C-3).

7) als ungepfropfte Kautschukkomponente ein handelsübliches Polybutadien "Buna CB HX-529" (Bayer) (Komponente C-4).

Die Pfropfkautschuke wurden durch Ausfällen mittels heißer MgSO$_4$-Lösung und Trocknen im Vakuum in Substanz gewonnen. Die erfindungsgemäße Mischung wurde nach Vormischen der Einzelkomponenten durch Coextrusion bei 240°C erhalten.

Tabelle

| Vers. | Zusammensetzung / Gew.-Teile | | | | | | $MFI^{200°}_{212N}$ | $A_k/kJ.m^{-2}$ |
|---|---|---|---|---|---|---|---|---|
| | Komp. A | | Komp. B | | Komp. C | | | |
| 1 | A-2 | 58 | B | 10 | C-1 | 42 | 18,7 | 13,7 |
| 2 | A-2 | 52 | B | 10 | C-2 | 48 | 4,6 | 28,9 |
| 3 | A-2 | 54 | B | 10 | C-3 | 36 | 27,2 | 16,3 |
| a | A-1 | 54 | B | 10 | C-4 | 36 | 36,2 | 1,0 |
| b | A-1 | 47 | B | 10 | C-4 | 43 | 4,8 | 2,1 |
| c | A-2 | 54 | B | 10 | C-4 | 36 | 7,1 | 1,4 |

EP 0 218 098 B1

## EP 0 218 098 B1

**Patentansprüche**

1. Thermoplastische Formmasse aus 20 bis 95 Gew.-Teilen mindestens eines Styrolpolymerisats, 5 bis 30 Gew.-Teilen mindestens eines ionisch vernetzten Ethylencopolymerisats, das α,β-ungesättigte Alkencarbonsäuren, von denen mindestens 10% mit einem Metallsalz neutralisiert sind, einpolymerisiert enthält und 5 bis 45 Gew.-Teilen mindestens eines Synthesekautschuks, auf den Styrol oder α-Methylstyrol pfropfpolymerisiert ist, wobei der Synthesekautschuk eine Glastemperatur unterhalb von 0°C aufweist und gegebenenfalls üblichen Zusätzen in üblichen Mengen.

2. Formmasse nach Anpruch 1, enthaltend ein Pfropfpolymerisat auf der Grundlage eines Synthesekautschuks vom Typ der Acrylsäurealkylester, konjugierten Diene oder Ethylen-Propylen-Diene, der eine Glastemperatur unter −30°C aufweist.

3. Formmasse nach Anspruch 1, enthaltend ein Pfropfpolymerisat, dessen Anteil an aufgepfropften Monomeren 20 bis 50 Gew.-% beträgt.

**Claims**

1. A thermoplastic molding material consisting of from 20 to 95 parts by weight of at least one styrene polymer, from 5 to 30 parts by weight of at least one ionically crosslinked ethylene copolymer which contains, as polymerized units, α,β-unsaturated alkenecarboxylic acids, at least 10% of which have been neutralized with a metal salt, and 5 to 45 parts by weight of at least one synthetic rubber onto which styrene or α-methylstyrene has been graft polymerized, the synthetic rubber having a glass transition temperature of less than 0°C, and, if required, conventional additives in the usual amounts.

2. A molding material as claimed in Claim 1, containing a graft polymer based on a synthetic rubber of the alkyl acrylate, conjugated diene or ethylene/propylene/diene type which has a glass transition temperature of less than −30°C.

3. A molding material as claimed in Claim 1, containing a graft polymer whose content of grafted monomers is from 20 to 50% by weight.

**Revendications**

1. Matière à mouler thermoplastique, constituée de 20 à 95 parties en poids d'au moins un polymère du styrène, de 5 à 30 parties en poids d'au moins un copolymère de l'éthylène à réticulation ionique, qui contient des acides alcène-carboxyliques α,β-insaturés dont au moins 10% sont neutralisés à l'aide d'un sel de métal et de 5 à 45 parties en poids d'au moins un caoutchouc de synthèse, sur lequel on a polymérisé par greffage du styrène ou de l'α-méthylstyrène, lequel caoutchouc de synthèse possède une température de transition vitreuse inférieure à 0°C et, éventuellement, d'additifs habituels en proportions usuelles.

2. Matière à mouler suivant la revendication 1, qui contient un polymère de greffage à base d'un caoutchouc de synthèse du type des esters alkyliques de l'acide acrylique, de diène conjugués ou d'éthylène-propylène-diènes, qui possède une température de transition vitreuse inférieure à −30°C.

3. Matière à mouler suivant la revendication 1, qui contient un polymère de greffage dont la proportion en monomères greffés varie de 20 à 50% en poids.